# FASCICULE DE BREVET EUROPEEN

(11) **EP 0 765 290 B1**
(45) Date de publication et mention de la délivrance du brevet: **28.10.1998**
(21) Numéro de dépôt: 96909202.2
(22) Date de dépôt: 26.03.1996
(51) Int. Cl.: C01F 7/06

(54) **PROCEDE DE TRAITEMENT DE BAUXITE A TRIHYDRATE D'ALUMINE A BASSE TENEUR EN SILICE REACTIVE**
VERFAHREN ZUR BEHANDLUNG VON BAUXIT MIT ALUMINIUM-HYDROXID MIT NIEDRIGEM GEHALT AN REAKTIVEM SILICIUMOXID
METHOD FOR PROCESSING TRIHYDRATE ALUMINA BAUXITE WITH A LOW REACTIVE SILICA CONTENT

(30) Priorité: 31.03.1995 FR 9504069
(43) Date de publication de la demande: 02.04.1997
(73) Titulaire: ALUMINIUM PECHINEY, 92400 Courbevoie (FR)
(72) Inventeur: LAMERANT, Jean-Michel, F-13320 Bouc-Bel-Air (FR)
(74) Mandataire: Mougeot, Jean-Claude
(86) Numéro de dépôt international: FR9600450
(87) Numéro de publication internationale: WO9630305

(56) Documents cités:
- EP-A- 0 203 873
- EP-A- 0 564 659
- WO-A-94/18122
- US-A- 4 426 363

## Description

### DOMAINE TECHNIQUE

L'invention concerne le traitement, selon le procédé Bayer, de bauxite à trihydrate d'alumine et à basse teneur en silice réactive, c'est-à-dire en silice susceptible d'être solubilisée dans la liqueur alcaline lors de l'attaque effectuée à la pression atmosphérique.

### ETAT DE LA TECHNIQUE - PROBLE POSE

Le procédé Bayer largement décrit dans la littérature spécialisée constitue la technique essentielle de production d'alumine destinée à être transformée en aluminium par électrolyse ignée ou à être utilisée à l'état d'hydrate, d'alumine de transition, d'alumine calcinée, d'alumine frittée ou fondue, dans les nombreuses applications relevant du domaine des alumines techniques.

Selon ce procédé, le minerai de bauxite est attaqué à chaud au moyen d'une solution aqueuse d'hydroxyde de sodium ou "soude caustique" à concentration appropriée, assurant ainsi la solubilisation de l'alumine et l'obtention d'une solution sursaturée d'aluminate de sodium. Après séparation de la phase solide constituant le résidu inattaqué (boues rouges) du minerai, la solution sursaturée d'aluminate de sodium est ensemencée avec des particules de trihydrate d'alumine dans le but de provoquer la précipitation de l'alumine sous forme de trihydrate d'alumine. La liqueur d'aluminate de sodium appauvrie en alumine, dite liqueur décomposée, est recyclée à l'étape de l'attaque après avoir été éventuellement concentrée et rechargée en hydroxyde de sodium ou soude caustique pour reconstituer une liqueur, dite liqueur d'attaque, dont la concentration est appropriée à la nature de la bauxite à attaquer.

Il est bien connu en effet de l'homme du métier que les conditions de traitement des bauxites par attaque alcaline, selon le procédé Bayer, doivent être adaptées en fonction du degré d'hydratation et de la structure cristallographique de l'alumine contenue, mais également de la nature et de la teneur des impuretés présentes (silice, oxydes de fer, matières humiques...). C'est ainsi que les bauxites contenant de l'alumine à l'état de monohydrate (boehmite, diaspore) sont traitées à des températures supérieures à 200°C et généralement comprises entre 220°C et 300°C, alors que les bauxites contenant de l'alumine à l'état de trihydrate (hydrargillite appelée également gibbsite) sont attaquées à des températures inférieures à 200°C, voire à la pression atmosphérique ce qui constitue alors une simplification et une économie importante en termes d'investissement et de coût d'exploitation avec notamment la suppression des autoclaves et réacteurs sous pression.

Dans la plupart des cas les rendements d'extraction de l'alumine solubilisable sont supérieurs à 95% et la pureté de la liqueur d'aluminate de sodium résultante (conditionnant la pureté du trihydrate d'alumine précipité ultérieurement) est satisfaisante si l'on prend la précaution au moins de limiter le taux de ces impuretés (silice soluble, oxydes de fer, matières humiques dégradées...) par des opérations sélectives d'épuration. Cette épuration, notamment dans le cas de la silice, peut s'avérer toutefois plus ou moins difficile à réaliser selon les formes minéralogiques de l'impureté présente.

En effet, la silice peut se présenter dans la bauxite sous plusieurs formes minéralogiques inégalement solubles dans la soude. Certaines formes minéralogiques, dont le Kaolin (Al₂O₃, 2SiO₂, 2H₂O) est l'espèce la plus répandue, se solubilisent en même temps que le trihydrate d'alumine contenu dans la bauxite.

On appelle communément "silice réactive" la part de la silice présente dans la bauxite sous l'une de ces formes, comptée en SiO₂ qui varie généralement de 0,5 à 7% du poids de bauxite sèche. En présence d'une liqueur sodique, la silice réactive est d'abord solubilisée puis reprécipitée sous forme de silico-aluminate de sodium très faiblement soluble.

La concentration en silice solubilisée dans la liqueur sodique est déterminée par l'équilibre de solubilité du silico-aluminate de sodium au bout d'un temps très long. Lors du traitement industriel d'une bauxite à trihydrate, il est exceptionnel que l'équilibre de solubilité du silico-aluminate de sodium soit donc atteint. Généralement, la concentration en silice dans la liqueur sodique est supérieure, voire très supérieure à l'équilibre de solubilité du silico-aluminate de sodium. Cette concentration est liée, par conséquent, à la fois à l'équilibre de solubilité du silico-aluminate de sodium et à la cinétique de précipitation de ce dernier. Cette cinétique est d'autant plus lente que la bauxite contient moins de silice réactive, car la réaction de précipitation du silico-aluminate de sodium est favorisée par la présence du produit de la réaction.

Dans le cycle Bayer, la concentration en silice solubilisée dans la liqueur enrichie en alumine au terme du traitement de la bauxite est un élément important car son niveau détermine celui de la liqueur d'attaque ainsi que celui de l'impureté silicium dans l'alumine produite ultérieurement. Il convient donc le plus souvent d'associer au processus d'extraction de l'alumine lors de l'attaque de la bauxite un processus dit de "dessilicatation" de la liqueur sodique visant à réduire la concentration en silice dans cette liqueur, et donc le niveau de l'impureté silicium dans l'alumine produite. Pour permettre la formation de silico-aluminate de sodium insoluble dont la cinétique de précipitation est relativement lente des durées de dessilicatation de plusieurs heures sont donc nécessaires, sans excéder toutefois une dizaine d'heures.

Ce processus de dessilicatation peut être réalisé au cours de l'attaque de la bauxite mais de préférence au cours d'une opération distincte précédant ou suivant l'attaque (brevets US-A-4426363 et FR-A-1506516 = US-A-3413087).

Les procédés de dessilicatation ont en commun de mettre en contact avec la bauxite broyée tout ou partie de la liqueur Bayer décomposée, à des concentrations de Na₂O caustique comprises entre 190 et 200 g/litre et à des températures comprises entre 80°C et 200°C, selon la nature de la bauxite traitée. Ils permettent d'obtenir des performances de dessilicatation satisfaisantes avec des bauxites contenant au moins 3% de silice réactive par rapport au poids de bauxite sèche.

En revanche l'application de l'art antérieur à la dessilicatation de bauxites à trihydrate, notamment d'origine africaine ou indienne, attaquée à la pression atmosphérique et dont la teneur en silice réactive est inférieure à 3% et le plus souvent comprise entre 0,5 et 1,5%, nécessite quelque soit le moment choisi pour la dessilicatation, avant, pendant ou après l'attaque, des temps de séjour d'au moins une trentaine d'heures soit plus de 3 fois la durée habituelle de dessilicatation. Ceci pour atteindre un taux acceptable de silice solubilisée dans la liqueur susaturée d'aluminate de sodium avant décomposition mesurée par le rapport SiO₂ sol/Na₂O inférieur à 0,90% et de préférence inférieur à 0,70%.

Dans de telles conditions les avantages procurés par le procédé d'attaque à la pression atmosphérique sont annihilés du fait de la réduction très notable des capacités de traitement qui doivent être compensées alors par des investissements complémentaires importants.

A noter par ailleurs que la solution préconisée par le document EP -A-0203873 (US-A-650653), au nom de la demanderesse, en vue d'accélérer la cinétique de précipitation de la silice en silico-aluminate de sodium et consistant à abaisser par dilution aqueuse à moins de 120 g Na₂O/litre la concentration de l'aliquote de liqueur décomposée destinée à la prédessilicatation, ne peut s'appliquer efficacement dans le cas présent car elle va à l'encontre des buts recherchés que sont :
- le maintien au moins de la capacité de production existante en évitant non seulement toute augmentation importante des temps de séjour mais aussi toute augmentation des volumes par dilution des produits circulant dans la chaîne.
- l'obtention d'une productivité d'au moins 70 kg par m3 de liqueur sursaturée d'aluminate de sodium à décomposer.

Cette productivité P étant mesurée par le produit de la concentration C en soude caustique de ladite liqueur par la variation ΔRp des rapports de concentration Rp = Al₂O₃ sol g/l/Na₂O g/l entre le début et la fin de la décomposition, il y a avantage à conserver pour l'attaque une concentration C en soude caustique la plus élevée possible, d'autant que cette concentration C détermine également la valeur maximum de Rp avant décomposition et par suite ΔRp. Il faut préciser en effet que lors de la dilution et de la décantation de la suspension issue de l'attaque atmosphérique les risques de rétrogradation sous forme d'hydrargillite, autrement dit de précipitation par nucléation spontanée d'une partie de l'alumine solubilisée en trihydrate d'alumine, sont d'autant plus grands que la sursaturation critique est atteinte, c'est-à-dire que pour un Rp donné la concentration en soude caustique est faible. Dans le cas présent le Rp maximum avant décomposition ne doit donc pas dépasser 1,05 ce qui limite pratiquement la productivité à 70 kg Al₂O₃/m3 pour un Rp final généralement compris entre 0,5 et 0,6.
- l'obtention d'un rendement d'extraction de l'alumine solubilisable d'au moins 95%, c'est-à-dire similaire à celui obtenu habituellement avec les autres types de bauxite, impliquant non seulement une attaque très complète du minerai mais aussi la prévention de toute rétrogradation (comme précédemment indiqué) pouvant conduire à une baisse importante de rendement en alumine (5 à 10% voire 20% en poids rapporté à la quantité totale d'alumine solubilisable).
- enfin la limitation du taux de silice solubilisée dans la liqueur sursaturée avant décantation et décomposition mesurée par le rapport pondéral SiO₂sol/Na₂O caust à moins de 0,90% et de préférence à moins de 0,70% pour garantir une teneur en silice dans le trihydrate d'alumine précipité ultérieurement, n'excédant pas 100 ppm.

### OBJET DE L'INVENTION

Le procédé mis au point par la demanderesse pour le traitement de bauxite à trihydrate d'alumine à faible teneur en silice réactive répond à ces différentes exigences et repose sur le constat surprenant qu'en combinant une dessilicatation avant attaque ou prédessilicatation avec une dessilicatation après attaque ou post-dessilicatation dont la durée globale n'excède pas une dizaine d'heures, correspondant aux temps de dessilicatation usuellement pratiqués avec les autres bauxites, il est possible d'obtenir des productivités de liqueur supérieures à 70 kg Al₂O₃ avec des rendements d'extraction de l'alumine solubilisable dans la bauxite d'au moins 95% tout en conservant une teneur en silice dans le trihydrate d'alumine précipité n'excédant pas 100 ppm ce qui implique des taux SiO₂sol/Na₂O caust dans la liqueur destinée à être décomposée inférieures à 0,9%.

Plus précisément l'invention concerne un procédé de traitement de bauxite à trihydrate d'alumine à faible teneur en silice réactive par attaque alcaline, selon le procédé Bayer, comportant les étapes de broyage et de dessilicatation en présence d'une aliquote de liqueur décomposée d'aluminate de sodium, puis d'attaque à la pression atmosphérique de ladite bauxite broyée et dessilicatée avec le reste de la liqueur décomposée, éventuellement concentrée, pendant un temps suffisant pour assurer la dissolution d'au moins 95% de l'alumine extractible de manière à former une suspension qui, après dilution, est décantée et filtrée pour séparer la fraction solide des boues rouges de la liqueur d'aluminate de sodium sursaturée qui est alors décomposée en présence d'amorce puis recyclée comme liqueur d'attaque après séparation du trihydrate d'alumine caractérisé en ce que :
- à la dessilicatation avant attaque de ladite bauxite broyée, ou prédessilicatation, d'une durée minimum de 30 minutes à une température n'excédant pas 108°C en présence d'une aliquote de liqueur décomposée, de rapport Rp des concentrations Al₂O₃ sol g/l/Na₂O caust g/l non critique et généralement compris entre 0,5 et 0,7, de concentration en soude caustique comprise entre 140 et 170 g Na₂O/litre, pour obtenir une suspension dont la concentration en matière sèche est au moins de 0,7 tonne par m3,
- on associe, immédiatement après attaque atmosphérique de ladite suspension par le reste de la liqueur décomposée de Rp non critique généralement compris entre 0,5 et 0,7 et de concentration en soude caustique réglée entre 180 et 220 g Na₂O/litre, une 2ème dessilicatation ou post-dessilicatation d'une durée d'au moins 2 heures à une température n'excédant pas 108°C et généralement comprise entre 95 et 105°C de la totalité de la suspension issue de l'attaque dont le Rp est alors compris entre 1,05 et 1,17 et la concentration en soude caustique est préalablement ajustée par dilution entre 140 et 180 g Na₂O/litre.

Lors de nombreux essais de dessilicatation de bauxites à trihydrate à faible teneur en silice réactive, notamment d'origine africaine ou indienne, la demanderesse a obtenu des résultats décevants en effectuant isolément la dessilicatation de la bauxite soit avant attaque atmosphérique de la bauxite (prédessilicatation selon l'art antérieur de l'exemple 1 en fin de description) soit après attaque atmosphérique de la bauxite (post-dessilicatation selon l'art antérieur de l'exemple 2 en fin de description).

En revanche en combinant dans des conditions bien définies qui sont explicitées ci-après les effets de la prédessilicatation et de la post-dessilicatation, la demanderesse a obtenu en effet des résultats au moins équivalent en termes de teneur en silice, rendement d'extraction et temps de séjour, et même supérieurs en terme de productivité de liqueur, à ceux habituellement obtenus lors de l'attaque atmopshérique des bauxites à trihydrate d'alumine usuelles et à fortiori des bauxites à trihydrate d'alumine à faible silice réactive.

### DESCRIPTION DETAILLEE

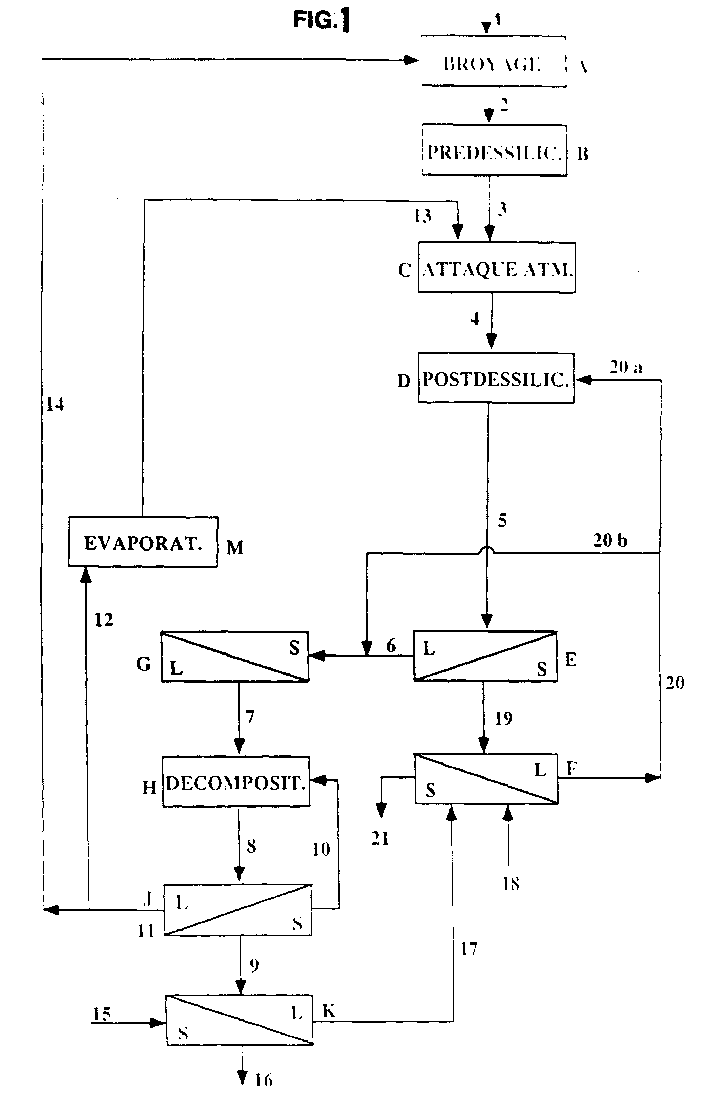

L'invention sera mieux comprise à partir de la description ci-après de sa mise en oeuvre préférentielle détaillée s'appuyant sur l'unique figure 1 représentation schématique du procédé selon l'invention.

La bauxite à trihydrate d'alumine 1 dont la teneur en silice réactive est inférieure à 3% et généralement comprise entre 0,5% et 1,5%, est mise en contact avec une aliquote 14 de liqueur décomposée 11 d'aluminate de sodium dont le rapport Rp est de préférence compris entre 0,57 et 0,67 et la concentration en soude caustique est comprise entre 150 et 160 g Na₂0/l, avec une teneur pondérale SiO₂ sol/Na₂O n'excédant pas 0,7% de manière à former, après broyage humide A, une suspension épaisse 2 qui subit une prédessilicatation B par chauffage, de préférence entre 100°C et 105°C, pendant 1 à 6 heures et dont la concentration en matière sèche doit rester comprise de préférence entre 0,9 et 1,1 tonne par m3 de suspension au terme de cette prédessilicatation.

Il est en effet important de travailler avec une concentration en matière sèche suffisante de la suspension car en deça de 0,7 tonne/m3, on observe un ralentissement sensible de la cinétique de dessilicatation. La suspension épaisse prédessilicatée 3 est ensuite attaquée en C la pression atmosphérique à une température n'excédant pas 108°C et comprise de préférence entre 103°C et 107°C pendant 1 à 3 heures par le reste 12 de la liqueur 13 décomposée préalablement concentrée par évaporation N, appelée liqueur d'attaque, dont le Rp est compris de préférence entre 0,57 et 0,67, et la concentration en soude caustique réglée entre 195 et 215 g Na₂O/litre.

Au terme de l'attaque C effectuée à la pression atmosphérique on obtient une nouvelle suspension 4 dont le Rp est compris de préférence entre 1,09 et 1,15 et la concentration en soude caustique généralement comprise entre 175 et 190 g Na₂O/l est ajustée par dilution entre 140 et 180 g Na₂O/l mais de préférence entre 160 et 170 g Na₂O/litre avec, par exemple, une fraction 20a des eaux de lavage à contre-courant des boues insolubles ou des eaux de lavage du trihydrate d'alumine de production

Il est de fait essentiel, avant d'effectuer la post-dessilicatation D de bien régler la concentration en soude caustique de la suspension. En effet une concentration en soude caustique supérieure à 180 g Na₂O/litre augmente la limite de solubilité de la silice réactive sans améliorer la cinétique de précipitation de la silice solubilisée en silico-aluminate, de sorte qu'il devient impossible d'abaisser à moins de 0,90% le taux de silice soluble/Na₂O caust de la suspension 4 issue de l'attaque sans un accroissement important des durées de prédessilicatation (au-delà de 15 heures). Inversement une trop grande dilution de la liqueur (≤ 140 g Na₂O/litre) favorise la précipitation de la silice en solution en silico-aluminate insoluble, mais augmente en revanche considérablement les risques de rétrogradation de la liqueur par sursaturation au cours de la post-dessilicatation quand le Rp visé est > 1,05. C'est la raison pour laquelle dans la zone de concentration moyenne 140-155 g Na₂O/litre revendiquée non préférentiellement par le procédé de l'invention, il est recommandé alors de viser des Rp compris entre 1,05 et 1,10 pour éviter des baisses de rendement trop importantes. L'intérêt du procédé de l'invention se trouve sensiblement réduit alors par la baisse de productivité résultante qui ne peut guère dépasser 70 kg Al₂O₃ par m3 de liqueur à décomposer.

On réalise ensuite la post-dessilicatation D de la suspension diluée 4 de préférence pendant 4 à 8 heures à une température comprise entre 100°C et 105°C pour abaisser le taux SiO₂ sol/Na₂O caust à moins de 0,9% et généralement à moins de 0,7% ; cela sans changement notable de la concentration en soude caustique et du Rp.

La suspension 5 résultante est mise en décantation E pour séparer de façon connue les boues rouges 19 mises en décharge 21 après lavage à contre-courant successivement par de l'eau de lavage 17 du trihydrate d'alumine de production 16 puis de l'eau pure 18.

La liqueur 6 issue de décantatation E, dont le Rp doit rester compris de préférence entre 1,08 et 1,15 est à nouveau diluée par une fraction 20b de la liqueur de dilution provenant du lavage à contre-courant des boues rouges avant de subir une filtration de sécurité G en vue d'éliminer les fines particules de boue encore en suspension. Le filtrat clarifié 7 de liqueur sursaturée d'aluminate de sodium, dont la concentration n'excède alors pas 160 g Na₂O/litre, est refroidi puis décomposé H en présence d'amorce de trihydrate 10 recyclé selon l'art antérieur. Le trihydrate d'alumine en suspension 8 dans la liqueur décomposée est séparé par filtration J pour être en majeure partie (90% environ en poids) recyclé comme amorce 10 et en partie mineure 9 (10% environ) extrait pour la production 16 après lavage K à l'eau 15. Le reliquat 12 du filtrat 11 de liqueur décomposée d'aluminate de sodium de Rp compris entre 0,55 et 0,67 et de concentration en soude caustique comprise entre 150 et 160 g Na₂O/litre, après prélèvement d'une aliquote 14 destinée au broyage humide et à la dessilicatation de la bauxite, est concentré par évaporation M pour fournir la liqueur d'attaque 13 de la bauxite broyée et prédessilicatée, dont les caractéristiques ont été déjà précisées.

On notera que le taux de SiO₂/Na₂O caust contrôlé généralement entre 0,60 et 0,70% dans la liqueur 5 après dilution D permet de garantir dans le trihydrate d'alumine précipité à l'étape de décomposition moins de 100 ppm de silice rapporté à Al₂O₃, et cela, sans modifier sensiblement les capacités de dessilicatation mises en oeuvre habituellement pour le traitement des bauxites à trihydrate, puisque les temps de séjour globaux d'une dizaine d'heures sont du même ordre, ni réduire les rendements d'extraction de l'alumine solubilisable qui restent supérieurs à 95%.

Les 7 exemples d'applications décrits ci-après ont été réalisés à partir d'un lot homogène de 60 tonnes de bauxite à trihydrate d'alumine d'origine guinéenne à faible teneur en silice réactive ayant la composition (sur sec) suivante :
Al₂O₃ totale : 49,3%
Al₂O₃ extract : 45,5%
SiO₂ totale : 2,44%
SiO₂ réactive : 0,83%
Fe₂O₃: 19,2%
TiO₂: 2,98%
Perte au feu : 25,88

Les exemples 1 et 2 concernent respectivement l'application de conditions standard de prédessilicatation et de post-dessilicatation des bauxites à trihydrate d'alumine selon l'art antérieur au traitement à pression atmosphérique des bauxites à trihydrate à faible teneur en silice réactive.

Les exemples 3 à 7 concernent l'application des conditions de mise en oeuvre de l'invention à cette même bauxite.

### EXEMPLE I

Prédessilicatation selon l'art antérieur et attaque atmosphérique d'une fraction de 5 tonnes du lot de 60 tonnes de bauxite guinéenne précédemment caractérisée comportant :
- broyage humide et dessilicatation en présence d'une aliquote de liqueur décomposée à raison de 1000 kg de matière sèche par m3 de suspension épaisse pendant 10 heures à 100°C.
- caractéristique de la liqueur décomposée :
   Rp = 0,58 Na₂O caust : 152 g/litre SiO₂ sol/Na₂O caust : 0,69%
- attaque à 107°C pendant 1h30 en réacteur atmosphérique par le reste de la liqueur décomposée concentrée ou liqueur d'attaque de concentration 201 g Na₂O/litre en visant un Rp de 1,05.
   Caractéristiques de la liqueur sursaturée après attaque, dilution et décantation de la suspension issue de l'attaque :
   Rp : 1,05
   Na₂O caust : 149 g/litre
   SiO₂/Na₂O : 1,19%

Si on enregistre un rendement d'attaque supérieur à 95% ainsi qu'une productivité de l'ordre de 70 kg Al₂O₃/m3 pour un Rp final de 0,58, le taux de silice solubilisée reste tout à fait rédhibitoire tant pour le trihydrate d'alumine précipité que pour la liqueur décomposée recyclée comme liqueur d'attaque.

Pour satisfaire à ce dernier critère une autre fraction de 5 tonnes du lot de bauxite a subi un traitement prolongé de prédessilicatation d'une durée totale de 30 heures toutes autres conditions restant identiques par ailleurs.

Les caractéristiques de la liqueur sursaturée après dilution et décantation sont les suivantes :
Rp : 1,04
Na₂O caust : 150 g/litre
SiO₂/Na₂O : 0,76%
Rendement % : 97,9

Elles peuvent être considérées comme acceptables mais au prix d'un triplement des durées habituelles de dessilicatation.

### EXEMPLE II

Post-dessilicatation selon l'art antérieur après attaque atmosphérique d'une autre fraction de 5 tonnes du même lot de bauxite guinéenne comportant :
- Broyage humide en présence d'une aliquote de liqueur décomposée de même caractéristique que celle de l'exemple I,
- Attaque à 107°C pendant 2 heures en réacteur atmosphérique par le reste de la liqueur décomposée concentrée en visant un Rp de 1,06,
- Après dilution de la suspension issue d'attaque à environ 145 g Na₂O/litre post-dessilicatation de 8 heures à 100°C.
   Caractéristiques de la liqueur sursaturée après décantation de la suspension issue de post-dessilicatation :
   Rp : 1,06
   Na₂O caust : 143 g/litre
   SiO₂/Na₂O : 1,12%
   Rendement % : 98,2

Comme dans l'exemple I le taux de silice solubilisée reste comme précédemment tout à fait rédhibitoire.

Pour satisfaire à ce dernier critère il a été nécessaire sur une autre fraction de 5 tonnes de la même bauxite d'effectuer une post-dessilicatation d'une durée de 32 heures, toutes autres conditions restant égales par ailleurs, le taux de SiO₂/Na₂O étant alors réduit à 0,71%, donc tout à fait satisfaisant mais au prix d'un quadruplement des durées de dessilicatation.

### EXEMPLE III

C'est le 1er exemple du procédé selon l'invention qui consiste à combiner une prédessilicatation de très courte durée 1 heure soit à une post-dessilicatation d'une durée de 7 heures avec dilution dans les conditions habituelles aux environs de 145 g Na₂O caust/litre soit à une post-dessilicatation également d'une durée de 7 heures mais avec faible dilution pour conserver une concentration en soude caustique élevée au cours de la post-dessilicatation, c'est-à-dire de l'ordre de 165 g Na₂O/litre. Ces traitements effectués sur une fraction de 10 tonnes du lot de bauxite guinéenne précédemment caractérisée comportent :
- Broyage humide et prédessilicatation en présence d'une aliquote de liqueur décomposée à raison de 1000 kg de matière sèche par m3 de suspension épaisse pendant 1 heure à 100°C.
   Caractéristique de la liqueur décomposée :
   Rp : 0,58 Na₂Ocaust: 152 g/l SiO₂sol/Na₂O caust : 0,72%
- Attaque à 107°C pendant lh30 en réacteur atmosphérique par le reste de la liqueur décomposée concentrée ou liqueur d'attaque de concentration 203 g Na₂O/litre en visant un Rp de 1,11.
   A) Sur une moitié de la suspension issue de l'attaque ajustement de la concentration par dilution à l'eau à 145 g Na₂O/litre et post-dessilicatation de 7 heures à 100°C.
      - Caractéristiques de la liqueur sursaturée après décantation de la suspension issue de post-dessilicatation :
      Rp : 1,10
      Na₂O caust : 147 g/litre
      SiO₂/Na₂O caust : 0,79
      Rendement % : 96,3
   B) Sur l'autre moitié de la suspension issue de l'attaque ajustement de la concentration par faible dilution à l'eau à 165 g Na₂O/litre et post-dessilicatation de 7 heures à 100°C.
      Caractéristique de la liqueur sursaturée après décantation de la suspension issue de post-dessilicatation :
      Rp : 1,11
      Na₂O caust : 168 g/litre
      SiO₂/Na₂O : 0,86
      Rendement % : 98,8

On constate globalement quelle que soit la variante A ou 8, que la combinaison d'une prédessilicatation courte avec une post-dessilicatation normale d'une durée totale de 1 + 7 = 8 heures est beaucoup plus efficace que les traitements isolés de prédessilicatation ou de post-dessilicatation de durée équivalente.

Indépendemment de l'élimination de la silice, à rendement équivalent de l'ordre de 98%, les productivités atteintes avec le procédé selon l'invention sont nettement supérieures en particulier dans la variante B de l'exemple 2 où après dilution de la liqueur à 150 g Na₂O/litre et en visant un Rp final de 0,57 on obtient :
150 (1,11 - 0,57) = 81 kg Al₂O₃/m3

La variante A, sensiblement plus performante que la variante B en terme de dessilicatation par suite de l'effet de dilution, montre ses limites en terme de Rp du fait d'une légère dégradation de l'alumine au cours de post-dessilicatation se traduisant par une diminution sensible du rendement d'extraction de 2,5% par rapport à la variante B.

### EXEMPLE IV

Cet exemple du procédé selon l'invention consiste à combiner une prédessilicatation de courte durée 3 heures, soit à une post-dessilicatation d'une durée de 7 heures avec dilution préalable dans les conditions habituelles à environ 145 g Na₂O/litre, soit à une post-dessilicatation d'une durée de 7 heures avec faible dilution, c'est-à-dire dilution préalable à environ 165 g Na₂O/litre. Ces traitements effectués sur une fraction de 10 tonnes du lot de bauxite guinéenne précédemment caractérisé comporte :
- Broyage humide et prédessilicatation en présence d'une aliquote de liqueur décomposée de 1000 kg de matière sèche par m3 de suspension épaisse pendant 3 heures à 100°C.
   Caractéristiques de la liqueur décomposée identiques à celle de la liqueur de l'exemple III.
- Attaque à 107°C pendant lh30 en réacteur atmosphérique par le reste de la liqueur décomposée concentrée ou liqueur d'attaque identique à celle de l'exemple III en visant un Rp de 1,15.
   A) Sur une moitié de la suspension issue de l'attaque ajustement de la concentration par dilution à l'eau à 145 g Na₂O/litre et post-dessilicatation de 7 heures à 100°C.
      Caractéristiques de ia liqueur sursaturée après décantation de ia suspension issue de post-dessilicatation :
      Rp : 1,13
      Na₂O caust : 146 g/litre
      SiO₂/Na₂O% : 0,68
      Rendement % : 93,1
   B) Sur l'autre moitié de la suspension issue de l'attaque ajustement de la concentration par faible dilution à l'eau à 165 g Na₂/litre et post-dessilicatation de 7 heures à 100°C.
      Caractéristiques de la liqueur sursaturée après décantation de la suspension issue de post-dessilicatation :
      Rp : 1,15
      Na₂O caust : 168 g/litre
      SiO₂/Na₂O : 0,72
      Rendement % : 98,6

Après ajustement de la concentration de la liqueur à environ 150 g Na₂O/litre et en visant un Rp en fin de décomposition de 0,57 on enregistre une productivité très élevée de la liqueur (87 kg Al₂O₃ m3) selon la variante IV B, ainsi qu'un abaissement significatif du taux de silice. A noter que seule la variante IV B permet de s'affranchir des effets de la rétrogradation de l'alumine qui entraîne une baisse très significative du rendement d'extraction de l'alumine solubilisable dans la variante IV A. On remarque également que la durée globale de dessilicatation de 10 heures (3 h + 7 h) reste similaire à celle pratiquée pour le traitement des bauxites à trihydrate classiques.

### EXEMPLE V

Cet exemple du procédé selon l'invention consiste à combiner d'une part une prédessilicatation de durée moyenne 6 heures à une prédessilicatation standard d'une durée de 7 heures avec faible dilution préalable à environ 165 g Na₂O/litre.

Le Rp visé étant de 1,15 seuls les tests à faible dilution de la suspension issue de l'attaque ont été réalisés compte tenu de la rétrogradation constatée dans l'exemple IV A pour une telle valeur de Rp.

Ce traitement effectué sur une fraction de 5 tonnes du lot de bauxite guinéenne précédemment caractérisé comporte :
- Broyage humide et prédessilicatation en présence d'une aliquote de liqueur décomposée de 1000 kg de matière sèche par m3 de suspension épaisse pendant 6 heures à 100°C.
   Caractéristiques de la liqueur décomposée identiques à celle de la liqueur de l'exemple III.
- Attaque à 107°C pendant 1h30 en réacteur atmosphérique pour le reste de la liqueur décomposée concentrée ou liqueur d'attaque identique à celle de l'exemple III en visant un Rp de 1,15.
   Caractéristiques de la liqueur sursaturée après décantation de la suspension issue de post-dessilicatation :
   Rp : 1,15
   Na₂O caust : 168 g/litre
   SiO₂/Na₂O % : 0,65
   Rendement % : 98,1

Pour une durée globale de dessilicatation encore acceptable de 13 heures, on obtient une bonne épuration en silice de la liqueur en conservant un excellent rendement en dépit du Rp élevé.

### EXEMPLE VI

Cet exemple vise à déterminer la limite supérieure de Rp acceptable par le procédé selon l'invention en combinant d'une part une prédessilicatation de longue durée 9 heures à une post-dessilicatation standard d'une durée de 7 heures avec très faible dilution préalable à environ 175 g Na₂/litre dans le but de réduire les risques de rétrogradation puisque le Rp visé est 1,17. Ce traitement effectué sur une fraction de 5 tonnes du lot de bauxite guinéenne précédemment caractérisée comporte :
- Broyage humide et prédessilicatation en présence d'une aliquote de liqueur décomposée de 900 kg de matière sèche par m3 de suspension pendant 9 heures à 105°C.
   Caractéristiques de la liqueur décomposée identiques à celles de la liqueur de l'exemple III.
- Attaque à 107°C pendant 2h30 en réacteur atmosphérique par le reste de la liqueur décomposée concentrée ou liqueur d'attaque identique à celle de l'exemple III en visant un Rp de 1,17
- Post-dessilicatation d'une durée de 7 heures à 100°C de la suspension issue de l'attaque après ajustement de la concentration en soude caustique à 175 g/Na₂O/litre
   Caractéristiques après décantation de la suspension issue de post-dessilicatation :
   Rp : 1,13
   Na₂O caust : 177 g/litre
   SiO₂/Na₂O % : 0,63
   Rendement % : 88,8

On enregistre un perte de rendement de près de 10% par rapport aux résultats des exemples III, IV et V entrainant une chute importante de Rp qui confirme l'obligation de limiter l'application du procédé à des Rp n'excédant pas 1,15 même lorsque la suspension issue d'attaque conserve une concentration en soude caustique relativement élevée avant post-dessilicatation.

### EXEMPLE VII

Cet exemple du procédé selon l'invention consiste à combiner une prédessilicatation de durée moyenne 5 heures avec une post-dessilicatation de durée réduite à 4 heures avec faible dilution, environ 165 g Na₂O/litre et en visant un Rp de 1,12. Ce traitement effectué sur une fraction de 10 tonnes du lot de bauxite guinéenne précédemment caractérisée comporte :
- Broyage humide et prédessilicatation en présence d'une aliquote de liqueur décomposée à raison de 1100 kg de matière sèche par m3 de suspension épaisse pendant 5 heures à 100°C.
   Caractéristiques de la liqueur décomposée identiques à celles de la liqueur de l'exemple III.
- Attaque à 107°C pendant lh30 en réacteur atmosphérique par le reste de la liqueur décomposée concentrée ou liqueur d'attaque identique à celle de l'exemple III en visant un Rp de 1,12.
   Post-dessilicatation d'une durée de 4 heures à 105°C de la suspension issue de l'attaque après ajustement de la concentration en soude caustique à environ 170 g Na₂O/litre.

Caractéristiques après décantation de la suspension issue de post-dessilicatation :
Rp : 1,12
Na₂O caust : 171 g/litre
SiO₂/Na₂O % : 0,64
Rendement % : 98,4

Après dilution à environ 150 g Na₂O/litre de la liqueur décomposée jusqu'à Rp = 0,57 on obtient une productivité de 82,5 kg Al₂O₃/m3.

Le choix de conditions de durée moyenne tant pour la prédessilictation que pour la post-dessilicatation dans le cadre du procédé selon l'invention montre que l'on arrive à un excellent compromis entre l'épuration en silice, le rendement d'extraction qui reste très élevé pour un Rp de 1,12, une productivité supérieure à 80 kg Al₂O₃ par m3 de liqueur et cela pour une durée totale de dessilicatation n'excédant pas 9 heures.

### INTERET DU PROCEDE

Le procédé selon l'invention permet non seulement de traiter sans limitation de capacité par attaque à la pression atmosphérique les bauxites à trihydrate à faible silice réactive, avec des performances en termes de rendement d'attaque et de taux d'épuration en silice équivalentes à celles obtenues avec les autres bauxites à trihydrate, mais aussi d'améliorer considérablement la productivité des liqueurs à décomposer puisqu'il est possible d'atteindre des Rp de 1,12 voire 1,15 sans risque de rétrogradation et par voie de conséquence des productivités d'au moins 80 kg par m3 de liqueur donc bien supérieures à celles de l'art antérieur qui n'excèdent généralement pas 70 kg/m3.

## Revendications

1. Procédé de traitement de bauxite à trihydrate d'alumine à faible teneur en silice réactive par attaque alcaline, selon le procédé Bayer, comportant les étapes de broyage et de dessilicatation en présence d'une aliquote de liqueur décomposée d'aluminate de sodium, puis d'attaque à la pression atmosphérique de ladite bauxite broyée et dessilicatée avec le reste de la liqueur décomposée, éventuellement concentrée, pendant un temps suffisant pour assurer la dissolution d'au moins 95% de l'alumine extractible de manière à former une suspension qui, après dilution, est décantée et filtrée pour séparer la fraction solide des boues rouges de la liqueur d'aluminate de sodium sursaturée qui est alors décomposée en présence d'amorce puis recyclée comme liqueur d'attaque après séparation du trihydrate d'alumine caractérisé en ce que :
- à la dessilicatation avant attaque de ladite bauxite broyée, ou prédessilicatation, d'une durée minimum de 30 minutes effectuées à une température n'excédant pas 108°C en présence d'une aliquote de liqueur décomposée , de rapport Rp des concentrations Al₂O₃ sol g/l/Na₂O caust g/l non critique généralement compris entre 0,5 et 0,7, de concentration en soude caustique comprise entre 140 et 170 g Na₂O/l, pour obtenir une suspension dessilicatée dont la concentration en matière sèche est au moins de 0,7 tonne par m3 de suspension,
- on associe, immédiatement après attaque atmosphérique de ladite suspension par le reste de la liqueur décomposée de Rp non critique généralement compris entre 0,5 et 0,7 et de concentration en soude caustique réglée entre 180 et 220 g Na₂O/litre, une 2ème dessilicatation ou post-dessilicatation d'une durée d'au moins 2 heures à une température n'excédant pas 108°C et généralement comprise entre 95 et 105°C de la totalité de la suspension issue de l'attaque dont le Rp alors est compris entre 1,05 et 1,17 et la concentration en soude caustique est préalablement ajustée par dilution entre 140 et 180 g Na₂O/litre.

2. Procédé selon la revendication 1 caractérisé en ce que la teneur en silice réactive de la bauxite à trihydrate d'alumine est inférieure à 3% et généralement comprise entre 0,5 et 1,5% par rapport au poids de bauxite sèche.

3. Procédé selon la revendication 1 ou 2 caractérisé en ce que l'aliquote de liqueur décomposée d'aluminate de sodium mise en contact pour broyage humide avec ladite bauxite a un Rp compris entre 0,57 et 0,67, et une concentration en soude caustique comprise entre 150 et 160 g Na₂O/litre.

4. Procédé selon l'une quelconque des revendications 1 à 3 caractérisé en ce qu'après broyage humide de la bauxite, la prédessilicatation est effectuée de préférence entre 100°C et 105°C pendant 1 à 6 heures.

5. Procédé selon la revendication 4 caractérisé en ce que la concentration en matière sèche de la suspension issue de prédessilicatation est comprise entre 0,9 et 1,1 tonne par m3 de suspension.

6. Procédé selon l'une quelconque des revendications 1 à 5 caractérisé en ce que la suspension dessilicatée est attaquée à la pression atmosphérique à une température n'excédant pas 108°C et de préférence comprise entre 103°C et 107°C pendant 1 à 3 heures par le reste de la liqueur décomposée de Rp compris entre 0,57 et 0,67, dont la concentration en soude caustique est réglée entre 195 et 215 g Na₂O/litre.

7. Procédé selon l'une quelconque des revendications 1 à 6 caractérisé en ce que la suspension issue de l'attaque atmosphérique a un Rp compris entre 1,09 et 1,15 et une concentration en soude caustique comprise entre 175 et 190 g Na₂O/litre.

8. Procédé selon l'une quelconque des revendications 1 à 7 caractérisé en ce que la concentration en soude caustique de la suspension issue de l'attaque atmosphérique est ajustée par dilution entre 160 et 170 g Na₂O/litre.

9. Procédé selon la revendication 8 caractérisé en ce que la dilution est effectuée par une fraction des eaux de lavage à contre-courant des boues insolubles ou des eaux de lavage du trihydrate d'alumine de production.

10. Procédé selon l'une quelconque des revendications 1 à 9 caractérisé en ce que la post-dessilicatation de la suspension diluée est effectuée à une température comprise entre 100°C et 105°C pendant 4 à 8 heures.

## Claims

1. Treatment process for alumina trihydrate bauxite with a low content of reactive silica using alkaline digestion, using the Bayer process, including grinding and desilicating steps in the presence of a spent sodium aluminate liquor aliquot, followed by digestion of said ground and desilicated bauxite at atmospheric pressure with the rest of the spent and possibly concentrated liquor, for a sufficient time to dissolve at least 95% of the extractable alumina in order to form a slurry which, after dilution, is settled and filtered to separate the solid fraction of the red mud from the pregnant sodium aluminate liquor which is then treated in the presence of seeds and then recycled as a digestion liquor after separation of the alumina trihydrate, characterized in that:
- desilication is done before digestion of said ground bauxite (predesilication) for a minimum duration of 30 minutes at a temperature not exceeding 108°C in the presence of a spent liquor aliquot with a non-critical ratio Rp of sol Al₂O₃ in g/l / caust Na₂O in g/l concentrations usually between 0.5 and 0.7, with a caustic soda concentration of between 140 and 170 g Na₂O/l, to obtain a desilicated slurry in which the concentration of solid content is at least 0.7 T. per m³ of slurry.
- immediately after atmospheric digestion of said slurry by the rest of the spent non-critical liquor with Rp usually between 0.5 and 0.7 and caustic soda concentration adjusted between 180 and 220 g Na₂O/liter, a second desilication or post-desilication is adopted with a duration of at least 2 hours at a temperature not exceeding 108°C and usually between 95 and 105°C on the entire slurry derived from the digestion for which the Rp is then between 1.05 and 1.17 and the concentration of caustic soda is previously adjusted by dilution to between 140 and 180 g Na₂O/liter.

2. Process according to claim 1, characterized in that the reactive silica content of the bauxite with alumina trihydrate is less than 3% and is usually between 0.5 and 1.5% of the weight of dry bauxite.

3. Process according to claim 1 or 2, characterized in that the spent sodium aluminate liquor aliquot put into contact with said bauxite for wet grinding has Rp of between 0.57 and 0.67, and a caustic soda concentration of between 150 and 160 g Na₂O/liter.

4. Process according to any one of claims 1 to 3, characterized in that desilication is preferably done after wet grinding of the bauxite, between 100°C and 105°C for 1 to 6 hours.

5. Process according to claim 4, characterized in that the concentration of dry material in the slurry derived from predesilication is between 0.9 and 1.1 T. per m³ of slurry.

6. Process according to any one of claims 1 to 5, characterized in that the desilicated slurry is digested at atmospheric pressure at a temperature not exceeding 108°C and preferably between 103°C and 107°C for 1 to 3 hours by the rest of the spent liquor with Rp between 0.57 and 0.67, in which the concentration of caustic soda is adjusted between 195 and 215 g Na₂O/liter.

7. Process according to any one of claims 1 to 6, characterized in that the slurry derived from atmospheric digestion has an Rp of between 1.09 and 1.15 and a concentration of caustic soda between 175 and 190 g Na₂O/liter.

8. Process according to any one of claims 1 to 7, characterized in that the concentration of caustic soda in the slurry derived from the atmospheric digestion is adjusted by dilution to between 160 and 170 Na₂O/liter.

9. Process according to claim 8, characterized in that dilution is done by a fraction of the insoluble mud backwash water, or production alumina trihydrate wash water.

10. Process according to any one of claims 1 to 9, characterized in that post-desilication of the diluted slurry is done at a temperature of between 100°C and 105°C for 4 to 8 hours.

## Patentansprüche

1. Verfahren zur Behandlung von Bauxit mit Aluminiumhydroxid mit niedrigem Gehalt an reaktivem Siliziumoxid durch alkalisches Ätzen nach dem Bayer-Verfahren, bei dem in Anwesenheit eines zersetzten aliquoten Lösungsteils von Natriumaluminat Mahlungs- und Entsilikatisierungsschritte und anschließend mit atmosphärischem Druck Ätzschritte des gemahlenen und entsilikatisierten Bauxits mit dem Rest der zersetzten, eventuell konzentrierten Lösung während einer ausreichend langen Zeit durchgeführt werden, um die Auflösung des extrahierbaren Aluminiumoxids zu mindestens 95 % zu gewährleisten, so daß eine Suspension entsteht, die nach Verdünnung dekantiert und gefiltert wird, um den festen Anteil des Rotschlamms der übersättigten Natriumaluminatlösung abzuscheiden, welche dabei in Anwesenheit eines Initiators zersetzt und dann als Ätzlösung nach Abscheidung des Aluminiumhydroxids wiederverwertet wird, dadurch gekennzeichnet, daß
- in Verbindung mit der Entsilikatisierung vor dem Ätzen des gemahlenen Bauxits, oder Vorentsilikatisierung, während einer Mindestdauer von 30 Minuten bei einer 108°C nicht überschreitenden Temperatur in Anwesenheit eines zersetzten aliquoten Lösungsteils mit einem unkritischen Konzentrationsverhältnis Rp Al₂O₃ sol g/l/Na₂O caust g/l von gewöhnlich 0,5 bis 0,7 und einer Ätznatronkonzentration von 140 bis 170g Na₂O/l zur Herstellung einer entsilikatisierten Suspension mit einer Trockensubstanzkonzentration von mindestens 0,7 t pro m³ Suspension,
- unmittelbar nach dem atmophärischen Ätzen der Suspension mit dem Rest der zersetzten Lösung, deren unkritisches Rp in der Regel zwischen 0,5 und 0,7 liegt und deren Ätznatronkonzentration auf 180 bis 220 g Na₂O/Liter eingestellt ist, während einer Dauer von mindestens 2 Stunden bei einer 108°C nicht übersteigenden und in der Regel im Bereich von 95 bis 105°C liegenden Temperatur eine zweite Entsilikatisierung oder Nachentsilikatisierung der gesamten durch das Ätzen erhaltenen Suspension durchgeführt wird, deren Rp nunmehr zwischen 1,05 und 1,17 liegt und deren Ätznatronkonzentration vorher durch Verdünnung auf 140 bis 180 g Na₂O/Liter eingestellt wird.

2. Verfahren nach Anspruch 1, dadurch gekennzeichnet, daß der Gehalt an reaktivem Siliziumoxid des Bauxits mit Aluminiumhydroxid weniger als 3 % beträgt und in der Regel zwischen 0,5 und 1,5 % in bezug auf die Trockenbauxitmasse liegt.

3. Verfahren nach Anspruch 1 oder 2, dadurch gekennzeichnet, daß der zersetzte aliquote Lösungsteil von Natriumaluminat, der zur Naßmahlung mit dem Bauxit in Kontakt gebracht wird, ein Rp von 0,57 bis 0,67 und eine Ätznatronkonzentration von 150 bis 160 g Na₂O/Liter aufweist.

4. Verfahren nach einem der Ansprüche 1 bis 3, dadurch gekennzeichnet, daß die Vorentsilikatisierung nach der Naßmahlung des Bauxits vorzugsweise bei 100°C bis 105°C während 1 bis 6 Stunden durchgeführt wird.

5. Verfahren nach Anspruch 4, dadurch gekennzeichnet, daß die Trockensubstanzkonzentration der durch die Vorentsilikatisierung erhaltenen Suspension im Bereich von 0,9 bis 1,1 t pro m³ Suspension liegt.

6. Verfahren nach einem der Ansprüche 1 bis 5, dadurch gekennzeichnet, daß die entsilikatisierte Suspension mit atmosphärischem Druck bei einer 108°C nicht übersteigenden und vorzugsweise im Bereich von 103°C bis 107°C liegenden Temperatur während 1 bis 3 Stunden mit dem Rest der zersetzten Lösung geätzt wird, deren Rp zwischen 0,57 und 0,67 liegt und deren Ätznatronkonzentration auf 195 bis 215 g Na20/Liter eingestellt ist.

7. Verfahren nach einem der Ansprüche 1 bis 6, dadurch gekennzeichnet, daß die durch das atmophärische Ätzen erhaltene Suspension ein Rp von 1,09 bis 1,15 und eine Ätznatronkonzentration von 175 bis 190 g Na₂O/Liter aufweist.

8. Verfahren nach einem der Ansprüche 1 bis 7, dadurch gekennzeichnet, daß die Ätznatronkonzentration der durch das atmosphärische Ätzen erhaltenen Suspension durch Verdünnung auf 160 bis 170 g Na2O/Liter eingestellt wird.

9. Verfahren nach Anspruch 8, dadurch gekennzeichnet, daß die Verdünnung mit einer Fraktion des Waschwassers im Gegenstrom zum unlöslichen Schlamm oder des Waschwassers des Produktionsaluminiumhydroxids durchgeführt wird.

10. Verfahren nach einem der Ansprüche 1 bis 9, dadurch gekennzeichnet, daß die Nachentsilikatisierung der verdünnten Suspension bei einer Temperatur von 100°C bis 105°C während 4 bis 8 Stunden durchgeführt wird.
